# EUROPEAN PATENT APPLICATION

(11) **EP 1 679 331 A1**
(43) Date of publication of application: **12.07.2006**
(21) Application number: 04817302.5
(22) Date of filing: 26.10.2004
(51) Int. Cl.: C08G 63/06, C08G 63/78, C07C 51/12, C07C 51/367, C07C 59/06, C07C 67/36, C07C 69/14, C07B 61/00

(54) **ACYLOXY ACETIC ACID POLYMER AND METHOD FOR PRODUCING SAME**

(30) Priority: 29.10.2003 JP 2003369044; 08.03.2004 JP 2004064111; 21.04.2004 JP 2004125777
(71) Applicant: Nippon Kasei Chemical Company Limited, Iwaki-shi Fukushima-ken, 971-8101 (JP)
(72) Inventor: WADA,Atsushi Res.&Tech.Dev.Cen, Iwaki-shi, Fukushima 9718101 (JP); OHASHI,Tomonori Res&Tech.Dev.Cen, Iwaki-shi, Fukushima 9718101 (JP)
(74) Representative: HOFFMANN EITLE
(86) International application number: PCT/JP2004/015852
(87) International publication number: WO 2005/040246

(57) **Abstract**

There are provided an acyloxyacetic acid polymer which is capable of more readily synthesizing acyloxyacetic acid or glycolic acid, esters of these acids, and glycolides even under more moderate conditions in an economical manner, and can be used as a biodegradable polymer. The acyloxyacetic acid polymer of the present invention is represented by the general formula (1): 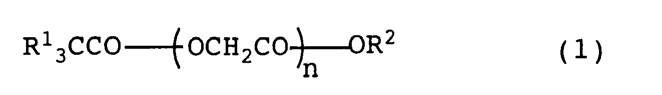 wherein R¹ and R² are each independently a hydrogen atom or a linear or branched lower alkyl group; and n is an integer of not less than 5. In the preferred embodiment of the present invention, the acyloxyacetic acid polymer is produced by reacting a formaldehyde compound, carbon monoxide, and an organocarboxylic acid or a derivative thereof, with each other in the presence of an acid catalyst.

## Description

### TECHNICAL FIELD

The present invention relates to a novel acyloxyacetic acid polymer and a process for producing the same.

### BACKGROUND ART

Among acyloxyacetic acids, acetoxyacetic acid having a high utility value has been used as a raw material for production of various chemical products such as agricultural chemicals and surface-treating agents and, therefore, is an important compound in chemical industries. In addition, glycolic acid is also an important compound which can be used not only directly as chemical detergents, etc., but also as intermediate products and as a raw material and an additive for polymers. It is known that these compounds are synthesized by the following methods.

The acetoxyacetic acid may be synthesized by the method of heating ethyl glycolate and acetic acid in benzene together with a small amount of sulfuric acid, and then removing water and ethyl acetate as by-products from the obtained reaction solution (for example, refer to "Beilstein", 3, 233), or the method of reacting acetic acid with an oxygen gas under the co-existence of three components, i.e., an alkali metal iodide, a metal oxide (or metal acetate) and iodine, under high-temperature and highpressure conditions (for example, refer to Japanese Patent Application Laid-open (KOKAI) No. 56-63941).

In the former method, ethyl glycolate as the raw material of the acetoxyacetic acid is an irritative and inflammable substance and, therefore, tends to be difficult to handle, and further is expensive. In the latter method, since the three catalyst components must coexist in the reaction system to exhibit a suitable catalyst performance, there tend to arise problems such as complicated operation for separating the catalyst components and a reaction product from each other, high costs and poor yield of the acetoxyacetic acid as the reaction product (yield of the acetoxyacetic acid as described in Examples of the Japanese Patent Application is merely 1% by weight).

Also, there has been proposed the method of producing a hydroxycarboxylic acid derivative by reacting an aliphatic aldehyde and carbon monoxide with each other in a reaction medium by using mordenite having a molar ratio of SiO₂ to Al₂O₃ of not less than 10 as a catalyst (for example, refer to Japanese Patent Application Laid-open (KOKAI) No. 11-147042), and it has been further reported therein that acetoxyacetic acid can be synthesized as the hydroxycarboxylic acid. Meanwhile, in order to produce the acetoxyacetic acid with a high yield, the method must be conducted at an elevated temperature as high as 170 to 200°C. In general, when using a highly toxic gas such as carbon monoxide in a reaction system, moderate reaction conditions are preferably selected. In addition, the high silica type mordenite having a high molar ratio SiO₂/Al₂O₃ is usually very expensive as compared to ordinary mordenite.

Also, there has been proposed the method of synthesizing acetoxyacetic acid by reacting formaldehyde with carbon monoxide and acetic acid and/or acetic anhydride in a reaction medium in the presence of a sulfate group-carrying metal oxide (sulfate group-carrying zirconia, sulfate group-carrying titania and sulfate group-carrying tin oxide) (for example, refer to Japanese Patent Application Laid-open (KOKAI) No. 2001-335538). However, in this method, it is not specifically reported to isolate the aimed product.

As to production of the glycolic acid and esters thereof, there has been proposed the method of producing the glycolic acid at one stage by reacting formaldehyde, water and carbon monoxide with each other under a high pressure condition using a mineral acid such as sulfuric acid, phosphoric acid and hydrochloric acid as a catalyst (Japanese Patent Publication (KOKOKU) No. 53-44454), the method of producing the glycolic acid at one stage by reacting formaldehyde, water and carbon monoxide with each other in hydrogen fluoride under a normal pressure (for example, refer to Japanese Patent Application Laid-open (KOKAI) No. 51-13719), etc. However, these methods have problems such as a complicated operation for separating the glycolic acid from the reaction solution and, therefore, fails to provide industrially excellent production processes.

In addition, it has been reported that when a formic ester, formaldehyde and carbon monoxide are reacted with each other in the presence of an acid catalyst, a slight amount of a condensed dimer is produced in the reaction system (for example, refer to Japanese Patent Application Laid-open (KOKAI) No. 56-122321). However, in this report, the produced dimer is directly subjected to hydrolysis or alcoholysis, and the dimer itself is not isolated.

### DISCLOSURE OF THE INVENTION

### Problem to be Solved by the Invention

The present invention has been conducted to solve the above problems. An object of the present invention is to provide an acyloxyacetic acid polymer which is capable of more readily synthesizing acyloxyacetic acid or glycolic acid, esters of these acids, and glycolides under more moderate reaction conditions in an economical manner, and can also be used as a biodegradable polymer, and a process for producing the acyloxyacetic acid polymer.

### Means for Solving Problem

As a result of the present inventors' earnest study, there have been found a novel acyloxyacetic acid polymer which is capable of synthesizing acyloxyacetic acid or glycolic acid by hydrolysis thereof, synthesizing acyloxyacetic esters or glycolic esters by alcoholysis thereof, and synthesizing glycolides by thermal decomposition thereof, as well as a process for producing the acyloxyacetic acid polymer. The present invention has been attained on the basis of the above finding.

That is, in a first aspect of the present invention, there is provided an acyloxyacetic acid polymer represented by the general formula (1): 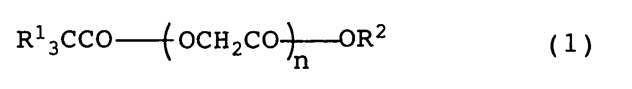 wherein R¹ and R² are each independently a hydrogen atom or a linear or branched lower alkyl group; and n is an integer of not less than 5.

In a second aspect of the present invention, there is provided a process for producing an acyloxyacetic acid polymer represented by the above general formula (1), said process comprising:
reacting a formaldehyde compound, carbon monoxide, and an organocarboxylic acid or a derivative thereof, with each other in the presence of an acid catalyst to obtain an acyloxyacetic acid derivative; and
condensing the acyloxyacetic acid derivative.

### Effect of the Invention

The acyloxyacetic acid polymer of the present invention is capable of synthesizing acyloxyacetic acid or glycolic acid by hydrolysis thereof, synthesizing acyloxyacetic esters or glycolic esters by alcoholysis thereof, and synthesizing glycolides by thermal decomposition thereof, and can also be used as a biodegradable polymer.

### PREFERRED EMBODIMENTS FOR CARRYING OUT THE INVENTION

The present invention is described in detail below. The acyloxyacetic acid polymer of the present invention is represented by the above general formula (1). In the general formula (1), each of R¹ and R² is preferably a hydrogen atom or a C₁ to C₆ lower alkyl group, more preferably a hydrogen atom or a C₁ to C₄ alkyl group, and still more preferably a hydrogen atom (in this case, the compound of the general formula (1) is an acetoxyacetic acid polymer). The degree of polymerization n is preferably not less than 5, more preferably not less than 10 and especially more preferably not less than 25. When the degree of polymerization n is not less than 5, the resultant acyloxyacetic acid polymer can be readily isolated from the reaction system. Further, when the degree of polymerization n is not less than 10, the resultant acyloxyacetic acid polymer tends to be isolated in the form of a solid and, therefore, can be more easily handled. The upper limit of the degree of polymerization n is usually 10,000.

The acyloxyacetic acid polymer of the present invention, for example, acetoxyacetic acid polymer, has a glycolic acid content of usually 110 to 130% by weight and an acetoxy content of usually 0.1 to 15% by weight as the values determined by a high speed liquid chromatography after undergoing hydrolysis with alkali. Further, the acyloxyacetic acid polymer has a melting point of usually not less than 120°C and a weight-average molecular weight of usually 500 to 580,000. The acyloxyacetic acid polymer may contain diglycolic acid as an impurity. The content of the diglycolic acid in the acyloxyacetic acid polymer is preferably not more than 1% by weight, more preferably not more than 0.1% by weight.

The acyloxyacetic acid polymer of the present invention is preferably obtained by condensing an acyloxyacetic acid derivative. Examples of the acyloxyacetic acid derivative used herein include acyloxy acetic acid, glycolic acid, acyloxy acetic acid oligomers, glycolic acid oligomers, and esters thereof.

The acyloxyacetic acid polymer of the present invention is preferably obtained by condensing the above acyloxyacetic acid derivative which is obtained by reacting a formaldehyde compound, carbon monoxide, and an organocarboxylic acid or a derivative thereof, with each other in the presence of an acid catalyst. In particular, it is preferred that a reaction solution containing the acyloxyacetic acid derivative obtained by reacting the organocarboxylic acid, the aldehyde compound and carbon monoxide with each other in the presence of the acid catalyst, is directly subjected to condensation reaction without isolating the acyloxyacetic acid derivative therefrom, and then the thus produced acyloxyacetic acid polymer of the present invention is isolated from the condensation reaction solution. The following chemical reaction formula represents an example of a series of the above reactions.

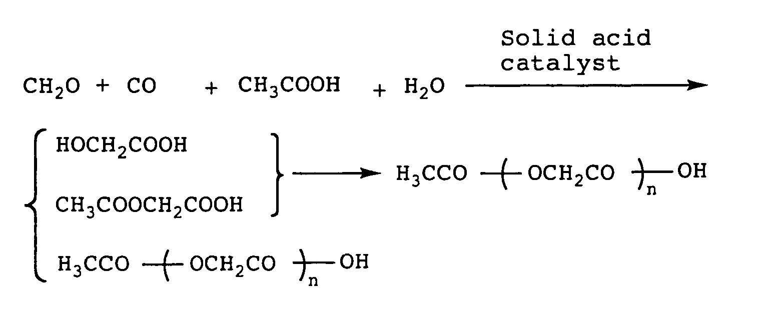

Examples of the acid catalyst include mineral acids such as hydrochloric acid, hydrobromic acid, hydroiodic acid, hydrofluoric acid, perchloric acid, nitric acid, sulfuric acid, hexafluorophosphoric acid, fluorosulfonic acid and chlorosulfonic acid; organic acids such as trifluoroacetic acid, methanesulfonic acid, benzenesulfonic acid, p-toluenesulfonic acid and trifluoromethanesulfonic acid; heteropolyacids such as tungstosilicic acid, tungstophosphoric acid and phosphomolybdic acid; Lewis acids such as boron trifluoride, phosphorus pentafluoride and antimony pentafluoride; solid acids such as strong acid cation exchange resins, clay minerals, zeolites, solidified acids, inorganic oxides, inorganic salts and composite oxides.

Examples of the strong acid cation exchange resins include those resins having a sulfonic group as a functional group, such as styrene-divinyl benzene copolymers, e.g., "AMBER LIST 15" produced by Rohm & Haas Inc., and "DIAION PK228" produced by Mitsubishi Chemical Corporation, and tetrafluoroethylene-based polymers, e.g., "NAFION" produced by DuPont Inc. Examples of the clay minerals and zeolites include montmorillonite, kaolinite, bentonite, halloysite, smectite, illite, vermiculite, chlorite, sepiolite, attapulgite, palygorskite and mordenite. In particular, among these clay minerals and zeolites, preferred are those treated with an acid such as hydrogen fluoride, or those obtained by replacing a replaceable metal ion of these clay minerals and zeolites with a hydrogen ion such as H-type zeolite. Examples of the solidified acids include those acids obtained by supporting an acid such as heteropolyacids on a carrier such as activated carbon and silica. In the consideration of facilitated isolation of the final reaction product, preferred are solid acids which are undissolved in the reaction system, and more preferred are strong acid cation exchange resins (sulfonic acid type cation exchange resins).

In the present invention, the above sulfonic acid type cation exchange resins are preferably previously washed with an acid before use. By acid-washing the sulfonic acid-type cation exchange resins, a sulfate group contained therein as an impurity can be readily removed therefrom, thereby enabling production of an acyloxyacetic acid polymer which is decreased in amount of the sulfate group mixed therein.

The acid washing may be conducted, for example, using the below-mentioned organocarboxylic acid as the raw material. The acid is used in such an amount that the weight ratio of the acid to the sulfonic acid type cation exchange resins is usually 1 to 10, preferably 2 to 5. The acid washing is usually performed at a temperature of 10 to 150°C for 0.5 to 10 hr. Also, the acid washing may be usually conducted in an appropriate container under stirring. With the acid washing, it is possible to remove a free sulfate group contained in the sulfonic acid type cation exchange resin, resulting in production of an acyloxyacetic acid polymer having a less content of the sulfate group mixed therein.

The aldehyde compound as the raw material is not particularly limited as long as the compound is capable of producing formaldehyde under the intended reaction conditions. Examples of the aldehyde compound include an aqueous formaldehyde solution (formalin), gaseous formaldehyde, paraformaldehyde, trioxane and methylal. These aldehyde compounds may be used in combination of any two or more thereof. Examples of the organocarboxylic acid include acetic acid, propanoic acid and butanoic acid as well as carboxylic acids having an unsaturated bond such as propiolic acid. The organocarboxylic acid derivative may be in the form of either an ester or an anhydride. In addition, the above acyloxyacetic acid derivative and the acyloxyacetic acid polymer of the present invention as a condensed product of the acyloxyacetic acid derivative, may also be used as the organocarboxylic acid derivative. The organocarboxylic acid is not only subjected to the reaction, but has a function as a reaction solvent. The amount of the organocarboxylic acid used is usually 1 to 100 moles, preferably 1 to 5 moles per 1 mole of formaldehyde as the raw material (in the case of the compounds capable of producing formaldehyde under the reaction conditions, calculated as the amount of formaldehyde produced therefrom). The amount of the organocarboxylic acid derivative used is similar to that of the organocarboxylic acid.

In addition to the organocarboxylic acid, a reaction solvent may be added to the reaction system. In this case, as the reaction solvent, there may be used either polar or non-polar solvents. However, when using a solvent having a certain polarity, the acyloxyacetic acid compound may be produced at a high yield. Examples of the reaction solvent include halogenated aliphatic hydrocarbons such as chloroform and dichloromethane; halogenated aromatic hydrocarbons such as chlorobenzene; aliphatic hydrocarbons such as hexane, cyclohexane and methyl cyclohexane; and aromatic hydrocarbons such as benzene.

As the carbon monoxide, there may be used not only high-purity carbon monoxide but also a mixed gas of carbon monoxide with an inert gas such as nitrogen and argon, hydrogen and/or carbon dioxide.

The reaction pressure is usually 10 to 200 kg/cm², preferably 50 to 100 kg/cm², and the reaction temperature is usually 80 to 200°C, preferably 100 to 150°C.

After completion of the reaction, the solid acid catalyst removed from the reaction system by filtration, etc., may be recycled to the next batch as the catalyst. This serves for reducing costs for the catalyst.

The condensation of the acyloxyacetic acid derivative is preferably conducted under heating to achieve a high condensation rate thereof. The condensation reaction temperature is usually 100 to 250°C, preferably 140 to 200°C, and the condensation reaction pressure may be a normal pressure, and is usually 650 to 10 torr, preferably 200 to 10 torr. The condensation reaction may be performed while removing acetic acid and water as by-products under reduced pressure.

The acyloxyacetic acid polymer as the aimed product may be isolated in the form of a solid by removing volatile components from the condensation reaction solution. Alternatively, the isolation of the aimed product may be conducted by adding a solvent into which the aimed polymer is hardly dissolved, such as water, to the condensation reaction solution, cooling the reaction solution to precipitate the aimed polymer, and then isolating the aimed polymer from the reaction mixture by an ordinary method, for example, centrifugal separation.

In particular, when using the solid acid catalyst, a series of the reactions may be performed in the following semi-continuous manner using such a production facility including a formalin thickener, a reactor accommodating the solid acid catalyst, an acetic acid thickener and a condensation reactor.

First, a formaldehyde compound concentrated in the formalin thickener is dissolved in the organocarboxylic acid, and the resultant solution is continuously fed to the reactor to which carbon monoxide is also continuously fed to conduct the reaction between the formaldehyde compound and carbon monoxide. Next, only a reaction solution containing the acyloxyacetic acid derivative is removed from the reactor, and fed to the acetic acid thickener where carbon monoxide is generated by releasing the pressure, and the organocarboxylic acid is recovered by concentrating the reaction solution, and the thus obtained carbon monoxide and organocarboxylic acid are respectively recycled to the reactor. A concentrated solution of the acyloxyacetic acid derivative is removed from the acetic acid thickener, and then fed to the condensation reactor where the acyloxyacetic acid derivative is subjected to heat-condensation reaction under reduced pressure, thereby producing the acyloxyacetic acid polymer. Next, the obtained condensation reaction solution was removed from the condensation reactor and then dehydrated under reduced pressure to recover the aimed acyloxyacetic acid polymer.

In the above production process, a water content in the reactor may vary depending upon the degree of concentration in the formalin thickener, a water content in the organocarboxylic acid recovered, the amounts of the compounds recycled, etc., and is preferably maintained within a constant range by controlling these conditions. The water content in the reactor is usually 0 to 20% by weight, preferably 1 to 5% by weight. Meanwhile, in order to facilitate control of the water content in the reactor, an acid anhydride such as acetic anhydride may also be used as the organocarboxylic acid.

In the preferred embodiment of the present invention, the sulfate group content in the acyloxyacetic acid polymer is usually not more than 3000 ppm, preferably not more than 500 ppm. When the sulfate group content in the acyloxyacetic acid polymer is too large, useful compounds obtained by hydrolysis, alcoholysis and thermal decomposition of the acyloxyacetic acid polymer such as acyloxyacetic acid, glycolic acid and glycolides tend to contain the sulfate group as an impurity, and, therefore, undesirably limited in applications thereof.

The acyloxyacetic acid polymer of the present invention may be used for synthesizing acyloxyacetic acid or glycolic acid by hydrolysis thereof, synthesizing acyloxyacetic esters or glycolic esters by alcoholysis thereof, or synthesizing glycolides by thermal decomposition thereof. For example, in the case of the glycolic esters, the acyloxyacetic acid polymer may be reacted, for example, with methanol in an amount 10 times that of the acyloxyacetic acid polymer, in the presence of the above acid catalyst, thereby readily producing methyl glycolate.

The acyloxyacetic acid polymer obtained according to the present invention may be analyzed by the following methods.

The melting point of the acyloxyacetic acid polymer is determined as follows. That is, using a differential scanning calorimeter "DSC6200 Model" produced by Seiko Instruments Co., Ltd., about 3 g of a sample filled in an aluminum pan is heated from 30°C to 260°C at a temperature rise rate of 10°C/min under an atmosphere of 50 mL/min nitrogen flow to determine an endotherm peak temperature as the melting point.

The weight-average molecular weight of the acyloxyacetic acid polymer is measured by GPC analyzing apparatus using hexafluoroisopropanol as a solvent. The measurement was conducted at a column temperature of 40°C and a flow rate of 1 mL/min, and a calibration curve is prepared using standard PMMA (polymethyl methacrylate).

### EXAMPLES:

The present invention is described in more detail by Examples, but the Examples are only illustrative and not intended to limit the scope of the present invention.

### Example 1:

An autoclave was charged with 90.9 g of acetic acid, 22.5 g of 80 wt% of paraformaldehyde and 15 g of a cation exchange resin "AMBER LIST 15 DRY" produced by Rohm & Haas Inc., as a catalyst, and purged with carbon monoxide. Thereafter, the contents of the autoclave were heated up to 120°C, and carbon monoxide was introduced thereinto until reaching 80 kg/cm². While stirring at 1200 rpm, the reaction was conducted for 3 hr.

After completion of the reaction, the pressure of carbon monoxide was released, and the autoclave was purged with nitrogen. Then, the resultant reaction solution was filtered to separate the catalyst therefrom, and the thus separated catalyst was washed with acetic acid. The reaction filtrate and the catalyst-washing solution were respectively sampled, and the sampled solution was hydrolyzed with alkali. As a result of analyzing the hydrolyzed solution using a high speed liquid chromatograph "LC-10A" manufactured by Shimadzu Seisakusho Co., Ltd., it was confirmed that the yield of glycolic acid was 95 mol% based on the amount of formaldehyde initially charged. Further, as a result of directly analyzing the reaction filtrate by a high speed liquid chromatography, it was confirmed that the content of glycolic acid in the filtrate was 8 mol%, the content of acetoxyacetic acid therein was 61 mol% and the content of acetoxyacetic acid oligomers therein was 26 mol% based on the amount of formaldehyde initially charged.

The filtrate was charged into a three-necked flask equipped with a stirrer, and heated up to 140°C in an oil bath under a reduced pressure of 100 torr. While distilling off acetic acid and water by-produced, the contents of the flask were subjected to condensation reaction. After conducting the condensation reaction at an inside temperature of 140°C for 4 hr, the obtained reaction solution was gradually cooled, and at the time at which the inside temperature of the flask reached 90°C, 50 g of pure water was added thereto, and the reaction solution was further cooled up to room temperature. The resultant acetoxyacetic acid polymer was separated from the reaction solution by filtration, and then dried in hot air at 60°C for 24 hr, thereby obtaining 34.2 g of an acetoxyacetic acid polymer. As a result, it was confirmed that the thus obtained acetoxyacetic acid polymer had a glycolic acid content of 111% by weight and an acetoxy content of 9.8% by weight (determined by a high speed liquid chromatography after being hydrolyzed with alkali), and the content of diglycolic acid as an impurity was not more than 0.1% by weight. Further, it was confirmed that the yield of the acetoxyacetic acid polymer was 83.2 mol% based on the amount of formaldehyde initially charged.

Also, it was confirmed that the acetoxyacetic acid polymer had a melting point of 125°C as measured by DSC, and a weight-average molecular weight of 4,000 (calculated as PMMA) as measured by GPC using hexafluoroisopropanol as a solvent, and the degree of polymerization n of the acetoxyacetic acid polymer calculated from these values was 68. Further, a filtrate obtained by separating the acetoxyacetic acid polymer from the reaction mixture by filtration was subjected to the same analysis as described above. As a result, it was confirmed that the filtrate contained glycolic acid in an amount of 10.5 mol% based on the amount of formaldehyde initially charged, and further the peaks attributed to impurities such as diglycolic acid were observed.

### Example 2:

The same procedure as defined in Example 1 was conducted except that the ion exchange resin separated by filtration after being used in Example 1 was directly used in a wet state as the catalyst, and the acetic acid solution distilled off and recovered upon the condensation reaction in Example 1 and then purified by distillation was used as the acetic acid, thereby performing the reaction. The acetic acid solution purified by distillation had a water content of 0.1% by weight (as determined by Karl Fischer method), and no particular peaks attributed to impurities other than acetic acid were observed. After completion of the reaction, the catalyst was separated from the reaction solution by filtration. As a result of conducting the same analysis as defined in Example 1, it was confirmed that the yield of glycolic acid was 92 mol% based on the amount of formaldehyde initially charged, and the catalyst recovered was repeatedly usable a plurality of times.

### Example 3:

The same procedure as defined in Example 1 was conducted except that "NAFION" produced by DuPont Inc., was used as the ion exchange resin, and the reaction pressure (carbon monoxide partial pressure) and the reaction temperature were changed to 100 kg/cm² and 130°C, respectively, thereby performing the reaction. After completion of the reaction, the reaction mixture and the catalyst were separated from each other by filtration. As a result of conducting the same analysis as defined in Example 1, it was confirmed that the yield of glycolic acid was 95 mol% based on the amount of formaldehyde initially charged.

The filtrate was charged into a three-necked flask equipped with a stirrer, and heated up to 200°C in an oil bath under a reduced pressure of 50 torr, and the contents of the flask were subjected to condensation reaction for 4 hr. After completion of the reaction, the obtained reaction solution was directly solidified upon cooling. The obtained solid was pulverized by a crusher, thereby obtaining a powdered product of the acetoxyacetic acid polymer. As a result of analyzing the powdered product, it was confirmed that the product had a glycolic acid content of 129% by weight and an acetoxy content of 1.0% by weight (determined by a high speed liquid chromatography after being hydrolyzed with alkali), and the content of diglycolic acid as an impurity was 0.6% by weight. Further, it was confirmed that the yield of the acetoxyacetic acid polymer was 89 mol% based on the amount of formaldehyde initially charged. Also, it was confirmed that the acetoxyacetic acid polymer had a melting point of 205°C as measured by DSC, and a weight-average molecular weight of 11,000 (calculated as PMMA) as measured by GPC using hexafluoroisopropanol as a solvent, and the degree of polymerization n of the acetoxyacetic acid polymer calculated from these values was 189.

### Reference Example 1:

The above-obtained acetoxyacetic acid polymer was subjected to methyl-esterification reaction. More specifically, 1 g of the acetoxyacetic acid polymer obtained in Example 3, 10 g of methanol, and 0.26 g of 96 wt% sulfuric acid as a catalyst were charged into a 80-mL autoclave made of hastelloy. Then, a magnetic stirrer bar was fitted into the autoclave, and the autoclave was purged with nitrogen. After sealing the autoclave, the contents thereof were reacted with each other at 100°C for 3 hr. The obtained reaction solution was cooled and then analyzed by a high speed liquid chromatography. As a result, it was confirmed that methyl glycolate was produced at a yield of 92 mol% based on glycolic acid contained in the acetoxyacetic acid polymer used.

### Example 4:

A glass container was charged with 150 g of a cation exchange resin "AMBER LIST 36 WET" produced by Rohm & Haas Inc., and further with 750 g of acetic acid as a washing solvent, and purged with nitrogen. Thereafter, the contents of the glass container were stirred at 100°C for 5 hr. After cooling the resultant reaction solution to room temperature, the cation exchange resin and the washing solvent were separated from each other by filtration, and the cation exchange resin was washed again with 750 g of acetic acid under the same conditions as used above. The acetic acid solvent used for the above washing under heating was sampled and then decomposed by applying a microwave thereto. Thereafter, the resultant decomposed product was subjected together with a carrier for ion chromatography to evaporation to dryness, diluted, and then subjected to ion chromatography to measure a concentration of a sulfate group contained in the solvent. As a result, it was confirmed that the concentration of sulfate group contained in the solvent obtained after the first washing operation was 170 ppm, and the concentration of sulfate group contained in the solvent obtained after the second washing operation was 55 ppm.

Next, the same procedure as defined in Example 1 was conducted except that the above cation exchange resin obtained after the acid washing was used as the catalyst, thereby performing the reaction. More specifically, the same procedure as defined in Example 1 was conducted except that 19.6 g of 92 wt% paraformaldehyde was used as the formaldehyde, 30.8 g of the cation exchange resin (about 15 g based on the dried resin) was used as the catalyst, and the reaction pressure (carbon monoxide partial pressure) was changed to 70 kg/cm², thereby performing the reaction. After completion of the reaction, the catalyst was separated from the reaction solution by filtration. As a result of conducting the same analysis as defined in Example 1, it was confirmed that the yield of glycolic acid was 92 mol% based on the amount of formaldehyde initially charged. As a result of measuring a concentration of sulfate group contained in the reaction solution (filtrate) separated from the catalyst by filtration by the same method as used above, it was confirmed that the sulfate group concentration was 140 ppm. Further, as a result of directly analyzing the filtrate using a high speed liquid chromatography, it was confirmed that the content of glycolic acid in the filtrate was 6 mol%, the content of acetoxyacetic acid therein was 60 mol% and the content of acetoxyacetic acid oligomers therein was 26 mol% based on the amount of formaldehyde initially charged.

The above filtrate was charged into a three-necked flask equipped with a stirrer, and heated up to 160°C in an oil bath under a reduced pressure of 100 torr. While distilling off acetic acid and water by-produced, the contents of the flask were subjected to condensation reaction. After conducting the reaction at an inside temperature of 160°C for 4 hr, the obtained reaction solution was gradually cooled, and at the time at which the inside temperature of the flask reached 90°C, 50 g of pure water was added thereto, and the reaction solution was further cooled to room temperature. The obtained acetoxyacetic acid polymer was separated from the reaction solution by filtration, and then dried in hot air at 60°C for 24 hr, thereby obtaining 33.0 g of the aimed acetoxyacetic acid polymer. As a result, it was confirmed that the thus obtained acetoxyacetic acid polymer had a glycolic acid content of 118% by weight and an acetoxy content of 9.8% by weight (determined by a high speed liquid chromatography after hydrolyzed with alkali), and the content of diglycolic acid as an impurity was not more than 0.1% by weight. Further, it was confirmed that the yield of the acetoxyacetic acid polymer was 85.4 mol% based on the amount of formaldehyde initially charged, and the concentration of sulfate group contained in the acetoxyacetic acid polymer was 470 ppm.

Also, it was confirmed that the acetoxyacetic acid polymer had a melting point of 170°C as measured by DSC, and a weight-average molecular weight of 6,500 (calculated as PMMA) as measured by GPC using hexafluoroisopropanol as a solvent, and the degree of polymerization n of the acetoxyacetic acid polymer calculated from these values was 111. Further, a filtrate obtained after separating the acetoxyacetic acid polymer from the reaction solution by filtration was subjected to the same analysis as defined above. As a result, it was confirmed that the filtrate contained glycolic acid in an amount of 6.5 mol% based on the amount of formaldehyde initially charged, and further the peaks attributed to impurities such as diglycolic acid were also observed.

## Claims

1. An acyloxyacetic acid polymer represented by the general formula (1): 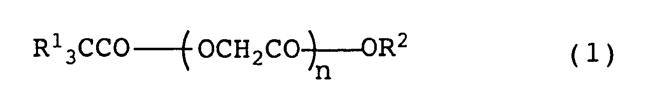 wherein R¹ and R² are each independently a hydrogen atom or a linear or branched lower alkyl group; and n is an integer of not less than 5.

2. An acyloxyacetic acid polymer according to claim 1, wherein the acyloxyacetic acid polymer is produced by condensing an acyloxyacetic acid derivative.

3. An acyloxyacetic acid polymer according to claim 2, wherein the condensation of the acyloxyacetic acid derivative is conducted under heating.

4. An acyloxyacetic acid polymer according to any one of claims 2 to 3, wherein the acyloxyacetic acid derivative is produced by reacting a formaldehyde compound, carbon monoxide, and an organocarboxylic acid or a derivative thereof, with each other in the presence of an acid catalyst.

5. A process for producing an acyloxyacetic acid polymer represented by the general formula (1): 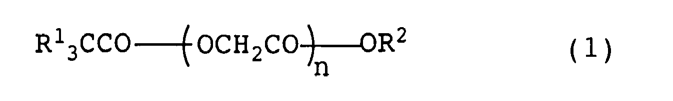 wherein R¹ and R² are each independently a hydrogen atom or a linear or branched lower alkyl group; and n is an integer of not less than 5, said process comprising:
reacting a formaldehyde compound, carbon monoxide, and an organocarboxylic acid or a derivative thereof, with each other in the presence of an acid catalyst to obtain an acyloxyacetic acid derivative; and
condensing the acyloxyacetic acid derivative.

6. A process according to claim 5, wherein the acid catalyst is a sulfonic acid type cation exchange resin previously washed with an acid.
